# EUROPEAN PATENT SPECIFICATION

(11) **EP 1 413 491 B1**
(45) Date of publication and mention of the grant of the patent: **03.05.2006**
(21) Application number: 03020056.2
(22) Date of filing: 04.09.2003
(51) Int. Cl.: B60S 3/04

(54) **Machine for cleaning vehicle windows**
Vorrichtung zum Reinigen von Fahrzeugscheiben
Dispositif de nettoyage pour vitre de véhicule automobile

(30) Priority: 23.10.2002 ES 200202442
(43) Date of publication of application: 28.04.2004
(73) Proprietor: Netwash Aplicaciones Tecnicas Del Lavado, S.L., 43206 Reus (Tarragona) (ES)
(72) Inventor: Villa Cervantes, Francisco, 43206 Reus (Tarragona) (ES)
(74) Representative: Canela Giménez, Teresa

(56) References cited:
- ES-A- 2 130 063
- ES-A- 2 130 064
- PATENT ABSTRACTS OF JAPAN vol. 2000, no. 16, 8 May 2001 (2001-05-08) -& JP 2001 018765 A (SENSHIYAKI SERVICE:KK), 23 January 2001 (2001-01-23)
- PATENT ABSTRACTS OF JAPAN vol. 009, no. 057 (M-363), 13 March 1985 (1985-03-13) -& JP 59 192654 A (TOUKIYOU TATSUNO:KK), 1 November 1984 (1984-11-01)

## Description

### FIELD OF THE INVENTION

The present invention consists of a machine for cleaning vehicle windows of the type which includes a swivelling cross-member that supports a tube terminating in a cleaning nozzle or wiper through which the cleaning fluid is expelled; the machine is designed to be located in motor-vehicle service stations, vehicle-washing facilities, petrol stations and similar places so that the user himself can clean the windows of his vehicle in a convenient, quick, clean, and effective manner.

### PRIOR ART

Vehicle windscreens very frequently become soiled with dust, insects, etc. which become encrusted and, later, are difficult to clean off. A more important result of this soiling of windscreens is loss of driving visibility with the consequent danger which it occasions.

For this reason, the driver should try to keep the windscreen of his vehicle clean. To do this, he must either clean the whole vehicle in a car-wash or the like or must himself clean only the windscreen, using sponges and water with detergent. As is known, a plurality of window-washing wipers or tools exist although it is more usual, particularly when travelling long distances, to use buckets of water with cloths or sponges which petrol stations and self-service stations generally provide for their customers' use.

Unfortunately, the said containers of water and/or detergent are usually dirty, or without fluid and/or the cloth or wiper is dirty, with the consequent danger of scratching the windscreen and with the result of inadequate cleanliness.

For the proprietors of the said petrol stations, the maintenance of this free service represents an annoying task of replacing the fluid and cleaning the tools used, with the additional disadvantage that the area in which customers clean windscreens becomes soaked with dirty water and detergent, with the consequent risk of slipping.

Various appliances have been designed to alleviate these problems and also to enable self-service stations to obtain an economic return for the provision of cleaning tools.

Document JP2001018765 A describes a machine for cleaning windows of vehicles according to the preamble of claim 1.

Spanish patents ES2130064 and ES2135298, both in the name of Fernando Gómez, propose respective self-service vehicle-washing facilities for one or more washing bays, with the use of a swivelling cross-member articulated to which is a gun or nozzle for the application of cleaning fluids which are selected in accordance with a previously-selected washing program.

A drain 20 for collecting washing residues is provided in the ground, in the washing area.

The disadvantage of this cleaning facility is that, owing to its complexity and versatility of washing options, it cannot be used in conditions such as those that are required by a driver when filling up his vehicle, when he wishes only to clean his windscreen quickly and to be able to continue on his journey. Consequently, the said patents do not describe a machine for cleaning vehicle windows in an effective manner but a machine for the general washing of the motor vehicle.

Moreover, for use for the purposes of the present invention, the existence of residual cleaning fluids which are discharged underground would represent a serious disadvantage for the use of the said washing machine in areas which are intended to be clean such as, for example, the paving in filling stations in refuelling areas.

The present invention is intended to remedy all of the problems mentioned above by the provision of a machine for cleaning vehicle windows which is quick and easy to use and which provides complete cleanliness in the washing area by collecting and recycling the washing residues in the machine itself.

The present invention is intended to be located close to refuelling areas in petrol stations in an area in which it can conveniently be used whilst the vehicle is being filled up, as an additional device in vehicle-washing facilities, in vehicle transit areas, etc.

### BRIEF DESCRIPTION OF THE INVENTION

The present invention describes a machine for cleaning vehicle windows which is formed by a main body in which there are reservoirs for detergent and for recycling cleaning fluid, force, mixing, and suction pumps, electronic and electrical control elements, as well as activation means comprising a coin-operated or card-operated mechanism or a console system with operating buttons.

A swivelling cross-member raised above the main body supports a tube the end of which bears a cleaning wiper through which the cleaning fluid is applied. The wiper has a cleaning and sealing sponge, cleaning-liquid expulsion nozzles, and a duct for the suction of the cleaning substances.

A trigger arranged on the wiper and connected to the control means of the device of the invention as a whole regulates the dosing of cleaning fluid.

In the present invention, a filter is provided in the circuit for the discharge of the washing substances, for collecting the residues which the washing water entrains before the water is sent to a reservoir for the collection thereof and before it is conveyed towards the drains.

### BRIEF DESCRIPTION OF THE DRAWINGS

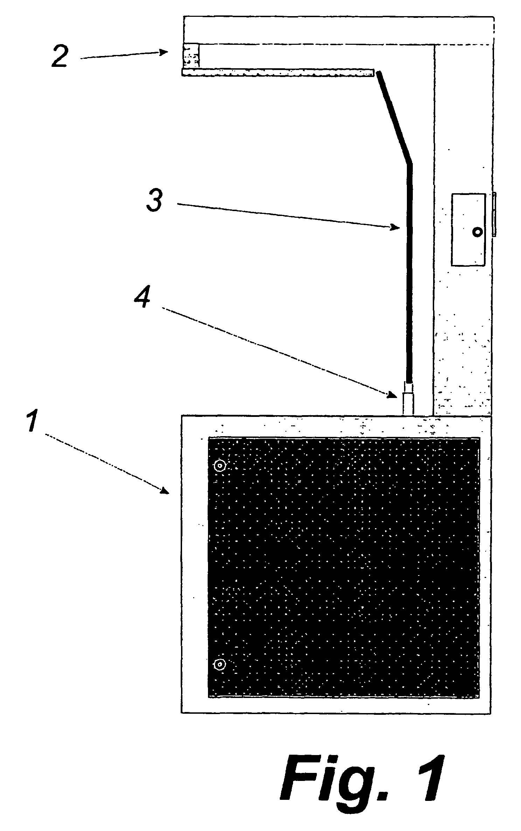

For a better understanding of the invention, 3 sheets of drawings are appended. In the drawings, Figure 1 is a front view of the device of the invention.

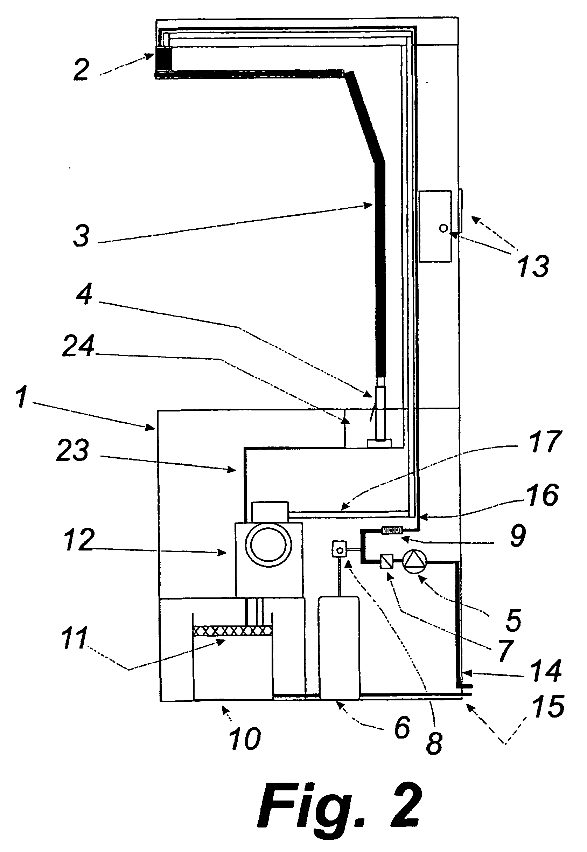

Figure 2 is a sectioned view of Figure 1 showing the main components of the machine of the invention.

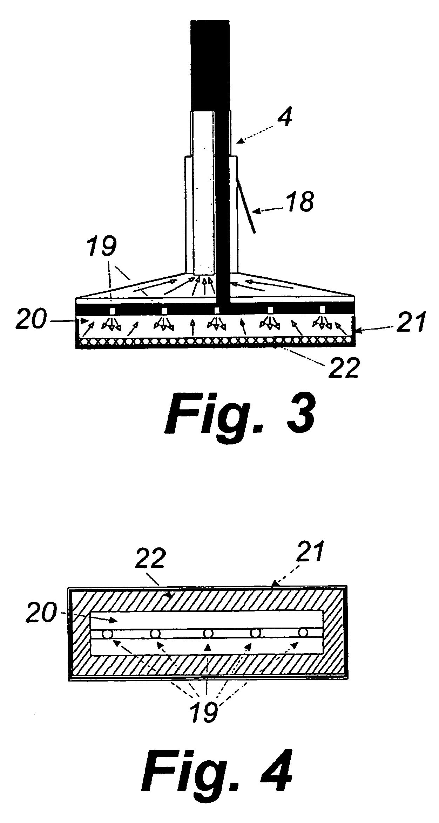

Figures 3 and 4 show schematically the washing wiper as developed in the present invention, in a sectioned elevational view and a plan view, respectively.

### DETAILED DESCRIPTION OF THE INVENTION

The present invention consists of a machine for cleaning vehicle windows which comprises a main body 1 in which all of the receptacles and pumps are located and electrical-current connectors, water inlets and outlets, and the control means of the cleaning machine as a whole are connected. A swivelling cross-member 2 is disposed in a raised arrangement relative to the main body 1, supporting a washing wiper 4 which receives, via a flexible tube 3, a duct 16 for the expulsion of cleaning fluid and a duct 17 for the suction of residues and dirty water.

The cleaning fluid is the product of mixing performed by a foam reactor 9 which receives fluid supplied by a metering pump 8 associated with a detergent reservoir 6 plus water coming from a general water source and supplied at the appropriate pressure by means of a pump 5 and a reducer 7.

The washing wiper 4 has cleaning-liquid expulsion holes 19 which are arranged longitudinally in the central region of a cavity 20 formed by its body so that a cleaning sponge 22 is impregnated and the cleaning fluid is trapped by a peripheral rubber seal 21 extending around the outer periphery of the wiper 4 and is always inside internal cavity 20 of the wiper 4.

The suction duct 17 has the task of drawing in residues, dust, and the water, once it has been used for cleaning; the unit formed by the peripheral seal 21 and the cleaning sponge 22 and the suction performed from the suction duct 17 prevent the cleaning fluid from going beyond the central cavity 20 of the wiper 4.

By virtue of the action of a suction device 12, the dirty water withdrawn through the suction duct 17 is conveyed towards a dirty-water reservoir 10 after passing through a filter 11 for removing residues therefrom. The reservoir 10 is evacuated towards the general drain through a discharge duct 15.

The machine for cleaning vehicle windows according to the invention may be operated by a coin or card prepayment system 13' or alternatively may be operated by a start button 13, if desired.

Microprocessor-based control means, not shown, control the operation of all of the parts of the machine for cleaning vehicle windows according to the invention so as to determine the volume and proportion of the cleaning fluid, and to bring about the operation of the suction mechanism, the expulsion of dirty water towards the general drain, etc.

A trigger 18 located on the wiper 4 itself enables the user to regulate the output of cleaning fluid through the holes 19 and the control means organize the appropriate operations, by means of its microprocessors, in order for the pumps to deliver greater or lesser volumes.

In a preferred embodiment of the present invention, when the user operates the machine by pushing the start button 13, the suction pump or suction device 12 is started. When the user operates the trigger 18, the control means set the water and detergent pumps 5 and 8 in operation so that the foam reactor 9 sends the mixture or cleaning fluid towards the holes 19 in the cleaning wiper 4. It is the suction pump 12 which in the return path withdraws the cleaning fluid from the wiper 4 via the suction duct 17.

In the preferred embodiment of the present invention, there is a cavity or space 24 for containing the wiper 4 between uses. In order to keep the space 24 clean, it is connected to the suction pump 12 by means of a drain pipe 23.

The dirty water coming from the wiper 4 via the suction duct 17 and from the space 24 via the pipe 23 reaches the dirty-water reservoir 10, once some of its contaminants have been separated by means of the filter 11. The reservoir 10 is emptied through the duct 15 towards its drain when the control means of the machine according to the invention so determines.

## Claims

1. A machine for cleaning vehicle windows of the type which includes a swivelling cross-member which supports a flexible tube (3) terminating in a cleaning wiper (4) through which a cleaning fluid is expelled, having means for the preparation and expulsion of the cleaning fluid through said cleaning wiper (4), where said cleaning wiper (4) receives via said flexible tube (3), a duct (16) for the expulsion of cleaning fluid and a duct (17) for the suction of impurities and dirty water, whereby said machine includes:
- a main body (1) in which are located all receptacles, pumps, electrical-current connections, water inlets and outlets, and control means of the machine as a whole;
- means for supporting a cleaning wiper (4) in a raised arrangement relative to the main body (1);
**characterized in that** it comprises:
- means for retaining the said cleaning fluid in the central area (20) of the cleaning wiper (4), consisting of a cleaning sponge (22), a leaktight peripheral rubber seal which extends around the outer periphery of the wiper (4), and the said duct (17) for the suction of residues, dust, and the water used in the cleaning;
- means for drawing in and evacuating the cleaning fluid, once it has been used, together with the residues resulting from the cleaning performed;
- means, based on a microprocessor or a set of microprocessors, for controlling the general operation of all of the parts which make up the machine.

2. A machine for cleaning vehicle windows according to Claim 1, **characterized in that** said means for the preparation and expulsion of the cleaning fluid consists of a foam reactor (9) which receives the fluid supplie by a metering pump (8) associated with a detergent reservoir (6) plus water coming from a general water source and supplied at the appropriate pressure by means of a pump (5) and a reducer (7), and supply the expulsion duct (16) with cleaning fluid.

3. A machine for cleaning vehicle windows according to the preceding claims, **characterized in that** respective holes (19) are disposed in the cleaning wiper (4) and as the termination of the expulsion duct (16), the holes (19) being distributed longitudinally along the central cavity (20) of the said wiper (4) for the homogeneous expulsion of cleaning fluid inside the wiper (4).

4. A machine for cleaning vehicle windows according to the preceding claims, **characterized in that** the said wiper (4) has a trigger (18) for its operation and for regulating the volume of cleaning fluid supplied through the wiper (4).

5. A machine for cleaning vehicle windows according to the preceding claims, **characterized in that** there is, in the main body (1), a cavity or space (24) for containing the wiper (4) between uses, which space has a drain pipe (23).

6. A machine for cleaning vehicle windows according to the preceding claims, **characterized in that** the said means for drawing in and evacuating the cleaning fluid once it has been used, together with the residues resulting from the cleaning performed, consist of the said suction duct (17), the said drain pipe (23), and a suction pump or suction device (12) which sends the cleaning fluid and the residues to a reservoir (10) after passing them through a filter (11) for removing impurities, the said reservoir (10) subsequently being evacuated to the general drain.

7. A machine for cleaning vehicle windows according to the preceding claims, **characterized in that** it can be enabled to operate by means of push-buttons (13) or by means of a coin or card prepayment system (13').

## Patentansprüche

1. Maschine zum Reinigen von Fahrzeugscheiben von der Art, die ein Schwenk-Quer-Element umfasst, das einen flexiblen Schlauch (3) trägt, der in einem Reinigungswischer (4) endet, durch den ein Reinigungs-Fluid ausgegeben wird, mit Mitteln zum Bereitstellen und zur Ausgabe des Reinigungs-Fluids durch den Reinigungswischer (4), wo der Reinigungswischer (4) über den flexiblen Schlauch (3) eine Leitung (16) zur Ausgabe des Reinigungs-Fluides und eine Leitung (17) zum Absaugen von Verunreinigungen und schmutzigem Wasser empfängt, wobei die Maschine umfasst:
- einen Hauptkörper (1), in dem alle Behälter, Pumpen, elektrische Stromversorgungsanschlüsse, Wassereinlässe und -auslässe und Steuerungsmittel für die Maschine als Ganzes angeordnet sind;
- Mittel zum Halten des Reinigungswischers (4) in einer erhöhten Anordnung in Bezug auf den Hauptkörper (1);
**dadurch gekennzeichnet, dass** die Maschine umfasst:
- Mittel zum Rückhalten des Reinigungs-Fluides in dem zentralen Bereich (20) des Reinigungswischers (4), umfassend einen Reinigungsschwamm (22), eine dichte umlaufende Gummidichtung, die sich über den äußeren Umfang des Wischers (4) erstreckt und die Leitung (17) zum Absaugen von Resten, Staub und dem Wasser, das bei der Reinigung verwendet wird;
- Mittel zum Einziehen und Leeren des Reinigungs-Fluides, sobald es verwendet worden ist, zusammen mit Resten, die von der ausgeführten Reinigung resultieren;
- Mittel, basierend auf einem Mikroprozessor oder einem Satz von Mikroprozessoren, zur Steuerung des allgemeinen Betriebs von allen Elementen, die die Maschine ausmachen.

2. Maschine zum Reinigen von Fahrzeugscheiben gemäß Patentanspruch 1, **dadurch gekennzeichnet, dass** die Mittel zum Bereitstellen und zur Ausgabe des Reinigungs-Fluides folgendes umfassen:
Einen Schaumreaktor (9), der das Fluid aufnimmt, das von einer Dosierpumpe (8) zur Verfügung gestellt wird, verbunden mit einem Reinigungsmittelbehältnis (6) mit Wasser, das von einer allgemeinen Wasserquelle kommt und mittels einer Pumpe (5) und einem Minderer (7) mit angemessenem Druck zur Verfügung gestellt wird, und die Ausgabeleitung (16) mit dem Reinigungs-Fluid versorgt.

3. Maschine zum Reinigen von Fahrzeugscheiben entsprechend den vorhergehenden Ansprüchen, **dadurch gekennzeichnet, dass** entsprechende Öffnungen (19) in dem Reinigungswischer (4) angeordnet sind und dass bei einem Ende der Ausgabeleitung (16) die Öffnungen (19) in Längsrichtung entlang des zentralen Hohlraums (20) des Wischers (4) verteilt sind zur homogenen Ausgabe des Reinigungs-Fluids innenseitig des Wischers (4).

4. Maschine zum Reinigen von Fahrzeugscheiben gemäß einem der vorhergehenden Ansprüche, **dadurch gekennzeichnet, dass** der Wischer (4) einen Auslöser (18) für seinen Betrieb und für das Regulieren des Volumens von Reinigungs-Fluid hat, das durch den Wischer (4) zur Verfügung gestellt wird.

5. Maschine zum Reinigen von Fahrzeugscheiben gemäß einem der vorhergehenden Ansprüche, **dadurch gekennzeichnet, dass** in dem Hauptkörper (1) ein Hohlraum oder Raum (24) zur Aufnahme des Wischers (4) zwischen den Anwendungen vorgesehen ist, wobei der Raum eine Abflussleitung (23) hat.

6. Maschine zum Reinigen von Fahrzeugscheiben gemäß einem der vorhergehenden Ansprüche, **dadurch gekennzeichnet, dass** Mittel zum Einziehen und Leeren des Reinigungs-Fluides, sobald dieses verwendet worden ist, zusammen mit Resten, die von der ausgeführten Reinigung resultieren, folgendes umfassen: eine Absaugleitung (17), eine Abflussleitung (23), eine Ansaugpumpe oder Ansaugvorrichtung (12), die das Reinigungs-Fluid und die Reste an ein Reservoir (10) leitet, nachdem sie einen Filter (11) zur Entfernung von Verunreinigungen durchlaufen haben, wobei das Reservoir (10) anschließend in die allgemeine Entwässerung entleert wird.

7. Maschine zum Reinigen von Fahrzeugscheiben gemäß einem der vorhergehenden Ansprüche, **dadurch gekennzeichnet, dass** es möglich ist, diese mittels Druckknöpfen (13) oder mittels eines münzbetriebenen oder kartenbetriebenen Prepaid-Systems (13') zu betreiben.

## Revendications

1. Machine de nettoyage des vitres d'un véhicule du type comportant un élément pivotant transversal supportant un tube flexible (3) se terminant par un nettoyeur (4), à travers lequel un fluide de nettoyage est propulsé, comportant des moyens de préparation et d'expulsion de ce fluide de nettoyage à travers ledit nettoyeur (4), ce dernier recevant, via le tube flexible (3), une conduite (16) destinée à l'expulsion du fluide de nettoyage et une conduite (17) destinée à l'aspiration des impuretés et de l'eau sale, ladite machine comprenant :
- un corps principal (1) dans lequel prennent place tous les logements, les connexions électriques, les entrées et les sorties d'eau, et les moyens de commande de la machine,
- des moyens pour supporter le nettoyeur (4) dans une zone surélevée du corps principal (1),
**caractérisée en ce qu'**elle comprend :
- des moyens de retenue du fluide de nettoyage dans la zona centrale (20) du nettoyeur (4), constitués d'une éponge de nettoyage (22), d'un joint d'étanchéité périphérique en caoutchouc que s'étend sur la périphérie externe du nettoyeur (4) et la conduite (17) d'aspiration de résidus, de la poussière, et de l'eau utilisée pour le nettoyage,
- des moyens d'extraction et d'évacuation du fluide de nettoyage une fois celui-ci utilisé, ainsi que des résidus de nettoyage,
- des moyens faisant appel à un ou un jeu de microprocesseurs, permettant d'assurer la commande des ses différents éléments.

2. Machine de nettoyage des vitres d'un véhicule suivant la revendication 1 **caractérisée en ce que** les moyens de préparation et d'expulsion du fluide de nettoyage sont constitués d'un réacteur de mousse (9) qui reçoit un fluide délivré par une pompe doseuse (8) et qui est associé à un réservoir de détergent (6) ainsi que de l'eau provenant d'une alimentation générale et qui est fournie à la pression appropriée par une pompe (5) et un réducteur de pression (7) qui alimente la conduite d'expulsion (16) en fluide de nettoyage.

3. Machine de nettoyage des vitres d'un véhicule suivant l'une des revendications précédentes **caractérisée en ce que** des trous respectifs (19) sont réalisés dans le nettoyeur (4), à l'extrémité de la conduite (16), ces trous (19) répartis longitudinalement le long de la cavité centrale (20) du nettoyeur (4) de façon à assurer une expulsion homogène du fluide de nettoyage à l'intérieur de celui-ci.

4. Machine de nettoyage des vitres d'un véhicule suivant l'une des revendications précédentes **caractérisée en ce que** ledit nettoyeur (4) comporte une gâchette (18) assurant sa commande ainsi que la régulation du volume de fluide de nettoyage délivré par celui-ci.

5. Machine de nettoyage des vitres d'un véhicule suivant l'une des revendications précédentes **caractérisée en ce qu'**elle comporte, à l'intérieur du corps principal (1), une cavité ou espace (24) destiné à contenir le nettoyeur (4) entre les utilisations, cet espace comportant une conduite d'évacuation (23).

6. Machine de nettoyage des vitres d'un véhicule suivant l'une des revendications précédentes **caractérisée en ce que** les moyens d'extraction et d'évacuation du fluide de nettoyage utilisé et des résidus provenant du nettoyage sont constitués de ladite conduite d'aspiration (17), de la conduite d'évacuation (23), et d'une pompe ou d'un dispositif d'aspiration (12) qui envoient le fluide de nettoyage et les résidus dans un réservoir (10) après qu'ils aient traversé un filtre (11) destiné à retenir les impuretés, le réservoir (10) étant évacué vers la conduite d'évacuation générale.

7. Machine de nettoyage des vitres d'un véhicule suivant l'une des revendications précédentes **caractérisée en ce qu'**elle est en mesure d'être mise en marche par des boutons poussoirs (13), par de jetons ou par un système de prépaiement par carte (13').
